# EUROPEAN PATENT SPECIFICATION

(11) **EP 1 871 959 B1**
(45) Date of publication and mention of the grant of the patent: **29.06.2011**
(21) Application number: 06723856.8
(22) Date of filing: 30.03.2006
(51) Int. Cl.: E04B 1/86, B32B 25/02

(54) **MULTI-LAYER SOUND INSULATION PRODUCT FOR THE BUILDING INDUSTRY, METHOD FOR ITS PRODUCTION AND PLANT FOR IMPLEMENTING THE METHOD**
MEHRLAGIGES SCHALLDÄMMPRODUKT FÜR DIE BAUINDUSTRIE, VERFAHREN FÜR SEINE HERSTELLUNG UND ANLAGE ZUR DURCHFÜHRUNG DES VERFAHRENS
PRODUIT D'ISOLATION SONORE MULTICOUCHE POUR L'INDUSTRIE DU BATIMENT, PROCEDE DE PRODUCTION DE CE PRODUIT ET USINE PERMETTANT DE METTRE EN OEUVRE CE PROCEDE

(30) Priority: 07.04.2005 IT VE20050020
(43) Date of publication of application: 02.01.2008
(73) Proprietor: Isolgomma Srl, 36020 Albettone (IT)
(72) Inventor: GRAZIOLI, Claudio, I-36020 Albettone (IT)
(74) Representative: Piovesana, Paolo
(86) International application number: PCT/EP2006/002889
(87) International publication number: WO 2006/105904

(56) References cited:
- EP-A- 0 135 595
- DE-A1- 19 539 309
- FR-A- 2 763 880
- US-A- 3 978 263
- US-A- 4 709 781

## Description

The present invention relates to a multi-layer sound insulation product for application in the building industry, preferably but not exclusively to floors, comprising a layer of EPDM rubber granules or of suitably proportioned EPDM rubber and SBR rubber granules, a support layer and binding materials.

Hereinafter, the term "EPDM rubber" means a thermosetting plastic material comprising the ethylene-propylene-diene terpolymer. The term "SBR rubber" means a styrene-butadiene rubber.

In the building industry it is known to apply insulating layers for the purpose of ensuring normal living comfort in terms of sound insulation.

Italian patent No. 1,082,914 of the same applicant describes a sound insulation layer for buildings comprising a support element of tarred paper on which, by means of synthetic latex, a layer of rubber threads are glued, impregnated with the said synthetic latex as binding material.

For example, insulating layers of polyethylene are known which, because of their lightness and deformability under pressure, generally present problems in laying, with easy formation of air pockets, in particular when passing over pipes, to result in less efficient sound insulation.

Insulating layers are also known comprising cork, which exalts the sound insulation properties of the layer but results in a lesser layer elasticity which facilitates breakage during laying, with consequent loss of insulating effectiveness.

Insulating layers are also known comprising fibrous material, such as glass wool, which have to be laid in large thicknesses to attain a satisfactory sound insulation result. They also present the drawback of low compression strength and poor stability with time. An example of these materials is disclosed in Italian patent No. 1,154,762 of the same applicant.

Finally, sound insulation layers of compacted recycled rubber are known, generally presenting a high density which in addition to a lower sound insulation performance also results in laying difficulty, particularly on irregular surfaces or when passing over pipes.

FR 2763880 discloses a layer of polymer binder mixed with elastomeric particles of granules which is deposited on a base material carrying it along. The layer is continuously compressed and hardened, passing it through an oven.

EP 0135595 discloses a method for manufacturing a floor covering in the form of a width consisting of a mix of compressed rubber particles and a binder, featured by the fact that a layer of disintegrated waste rubber and/or granules of new or scarp rubber containing a prepolymer as a solvent- free single-component binder is continuously applied onto and evenly spread over a rotating endless belt conveyor.

US 3978263 discloses a process for manufacturing elastic floor covering boards comprising a lower, water-permeable layer of natural or synthetic rubber particles bound together by an adhesive and a cover layer of non-woven synthetic textile fibers.

The object of the invention is to improve this type of insulating layer in such a manner a to considerably improve its sound insulation properties by the use of new materials for the rubber mixture composition, and advantageously also by the use of new materials for the support layer and for the binders.

This and further objects which will be apparent from the ensuing description are attained by a multi-layer sound insulation product for the building industry as claimed in claim 1.

The binder used in the mixture is preferably synthetic latex, which is also used for gluing the two layers together.

In a preferred embodiment, the multi-layer sound insulation product of the present invention comprises a further binder material spray-deposited onto the layer of rubber granules on that side opposite the side glued to the support layer.

The support layer is advantageously of non-woven fabric which presents a greater surface roughness and porosity than traditional supports of bituminized felt paper, to ensure better gripping of the rubber layer to the support. Moreover, the non-woven fabric ensures greater flexibility and handleability of the multi-layer insulating product and also a greater resistance to tearing, resulting in a product with a longer life within the context of its usual use, i.e. on building sites.

A further advantage derives from the fact that EPDM rubber, in place of the commonly used SBR rubbers, also improves the properties of the multi-layer sound insulation product from the electrical insulation viewpoint, by offering a greater obstacle to stray currents.

A preferred embodiment of the present invention is described in detail hereinafter, together with a description of its production method and a plant for implementing the method, with reference to the accompanying drawings, in which:
Figure 1 is a schematic section through a multi-layer sound insulation product according to the invention;
Figure 2 represents a scheme of a plant for its production.

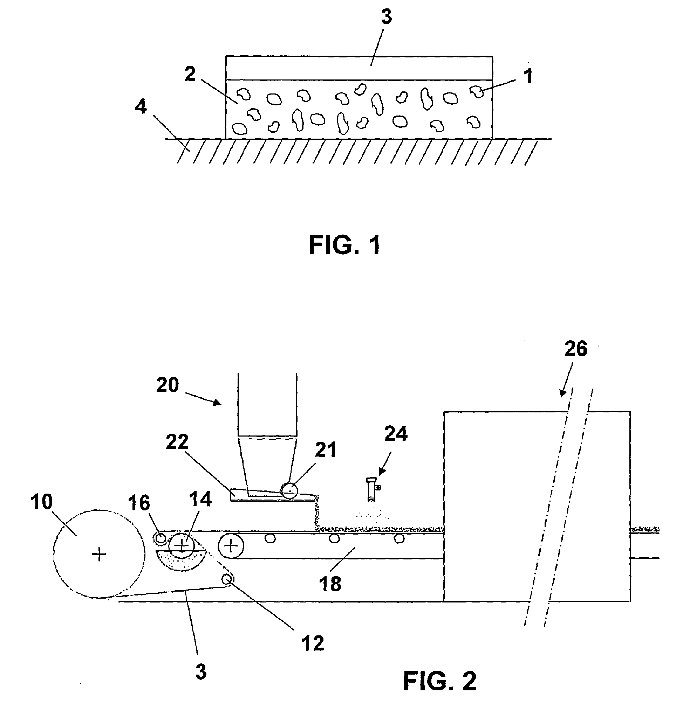

With reference to Figure 1, the product of the invention can be defined as a multi-layer sound insulation product for the building industry, comprising:
a) a layer of EPDM or EPDM/SBR rubber granules 1 and synthetic latex 2, which facilitates mutual gripping of rubber granules by acting as a mixture binder,
b) a support layer 3 of non-woven fabric.

The two layers a) and b) are glued together with synthetic latex, gripping of the rubber layer to the support being facilitated by the porosity and roughness of the non-woven fabric support.

A further acrylic-based binder material is sprayed onto the surface of the rubber layer on the opposite side to that glued to the support. By penetrating into the mixture, this further binder material improves gripping of the rubber particles together; it also reinforces the product, by increasing its surface rigidity and preventing damage to the layer at those points at which it rests on the floor 4. Further advantages deriving from the use of the further acrylic-based binder are a greater resistance to UV irradiation and to yellowing after exposure to the sun's rays, in addition to anti-mildew and impermeabilizing action.

A further advantage derives from the effective rigidifying and the nature of the components of the multi-layer product of the invention, which is elastic and handleable and, contrary to the usual practice with traditional products, can be rolled into rolls presenting the rubber layer facing outwards. In this manner, during laying, the multi-layer product needs merely to be unrolled onto the surface to be covered.

For practical laying reasons, the multi-layer product of the invention is preferably packaged as a roll, i.e. as a rolled web of length compatible with the length of the commercially available support layer. However the product of the invention can also be packaged as panels, i.e. as web pieces of a length enabling them to be stacked for storage or transport.

The multi-layer insulating product of the invention has been tested to evaluate its improved mechanical and acoustic performance.

The following table shows the values obtained for Apparent Dynamic Rigidity (ADR) measured in accordance with UNI EN 29052-1 and the consequent acoustic increment (Lnw) obtained by these values.

| SAMPLE | MATERIALS | | DYNAMIC RIGIDITY (S¹) | INSULATION INCREMENT |
|---|---|---|---|---|
| | | | (MN/m³) | ΔL_{nw}(dB) |
| R6-1 | SBR | FP | 25 | 28.4 |
| R6-6 | SBR/EPDM | NON-WOVEN FABRIC | 19 | 30.2 |
| R6-5 | EPDM | NON-WOVEN FABRIC | 15 | 31.7 |

| | | | | |
|---|---|---|---|---|
| SBR - Styrene Butadiene Rubber EPDM - Ethylene Propylene Diene Monomer FP - Felt paper NON-WOVEN FABRIC - Non-woven fabric | | | | |

The measurements were made on a traditional product (R5-1) comprising an SBR rubber mixture and a bituminized felt paper (FP) support, on a first multi-layer sound insulation product of the invention (R6-6) comprising an SBR/EPDM rubber mixture layer and a non-woven fabric (NON-WOVEN FABRIC) support, and on a second multi-layer sound insulation product of the invention (R6-5) comprising an EPDM rubber mixture and a non-woven fabric (NON-WOVEN FABRIC) support. The results show a considerable increment in sound insulation properties in relation to the partial or total use of EPDM rubber and non-woven fabric.

With reference to Figure 2, a method and relative plant are described hereinafter for the production of a sound insulation layer for the building industry in accordance with the invention.

A first roller 10 at the entry to the plant is loaded with a roll of non-woven fabric web 3, which is accompanied by a first tensioning roller 12 towards a spreading roller 14 which, by immersion, withdraws a layer of spreadable binder, advantageously synthetic latex, from a tank and deposits it on a face of the support layer. A second tensioning roller 16 accompanies said support layer spread with binder so that it rests, with its adhesive face upwards, on a conveyor belt 18. Above said conveyor belt 18 there is located a rubber distributor 20 comprising a dispensing roller 21 combined with a distributor plate on vibrating cells 22 which uniformly distributes the mixture of EPDM rubber granules, or at least a mixture comprising EDPM rubber granules, on the previously glued support layer.

Downstream of the rubber distributor, with reference to the advancement direction of the conveyor belt 18, the EPDM or EPDM/SBR rubber mixture deposited on the support passes below a glue sprayer 24 consisting of a system of high pressure guns producing a stream of fume-less micro-droplets of a further sprayable binder which is deposited onto the mixture of EPDM or EPDM/SBR rubber granules, without ruining their distribution. Finally, the conveyor belt 18 conveys the thus completed multi-layer sound insulation product into an oven 26. The final product leaving the oven 26 is rolled in the reverse sense to standard rolling, i.e. with the rubber layer facing outwards, to enable it to be laid by simple unrolling.

## Claims

1. A multi-layer sound insulation product for the building industry, comprising a layer of granules (1) at least partly of EPDM rubber, a support layer (3) at least one first binder (2) which glues the rubber granules together and to the support **characterised by** comprising a further binder sprayed onto said layer of rubber granules (1), on the side opposite that glued to the support layer (3).

2. A multi-layer sound insulation product as claimed in claim 1, **characterised in that** the first binder (2) is synthetic latex.

3. A multi-layer sound insulation product as claimed in claim 3, **characterised in that** said further binder is acrylic-based.

4. A multi-layer sound insulation product as claimed in any one of claims 1 to 3, **characterised in that** the support layer (3) consists of a non-woven fabric.

5. A method for forming multi-layer sound insulation products claimed in one or more of claims 1 to 4, comprising the following steps:
- spreading a first binder (2) over a surface of a support layer,
- distributing a mixture of rubber granules (1) over said previously glued surface,
- inserting the support layer (3) with the mixture (1) into a drying oven (26), **characterised in that** before said insertion into said oven (26), a second binder is sprayed onto said mixture, this latter at least partly comprising EPDM rubber.

6. A method as claimed in claim 5, **characterised by** rolling into a roll the multi-layer product leaving the oven (26) such that that surface thereof comprising the rubber granules (1) faces outwards.

7. A plant for implementing the method claimed in claim 5, comprising a holder for a roll (10) of a web of support material (3), a spreading station (14) of a first binder onto said advancing web, a distributing (20) station of rubber granules (1) over said support web (3) with the binding layer applied to its upper surface, and an oven (26) for drying the binder, **characterised in that**
said distributing station (20) is fed with and distributes rubber granules (1) at least partly of EPDM, between this station and said oven (26) there being provided a spraying station (24) of a second binder onto the granules already lying on the support web (3).

8. A plant as claimed in claim 7, **characterised by** comprising, downstream of the oven (26), a station for rolling the thus formed multi-layer sound insulation product into a roll such that that surface thereof comprising the rubber granules (1) faces outwards.

## Patentansprüche

1. Mehrschicht-Schallisolationsprodukt für die Bauindustrie, das eine Granulatschicht (1) wenigstens teilweise aus EPDM-Gummi, eine Trägerschicht (3) und wenigstens ein erstes Bindemittel (2), das das Gummigranulat zusammenlebt und an den Träger klebt, umfasst, **dadurch gekennzeichnet, dass** es ein weiteres Bindemittel umfasst, das auf die Gummigranulat-Schicht (1) auf der Seite gegenüber jener, die an die Trägerschicht (3) geklebt ist, gesprüht ist.

2. Mehrschicht-Schallisolationsprodukt nach Anspruch 1, **dadurch gekennzeichnet, dass** das erste Bindemittel (2) synthetischer Latex ist.

3. Mehrschicht-Schallisolationsprodukt nach Anspruch 3, **dadurch gekennzeichnet, dass** das weitere Bindemittel eine Acrylbasis hat.

4. Mehrschicht-Schallisolationsprodukt nach einem der Ansprüche 1 bis 3, **dadurch gekennzeichnet, dass** die Trägerschicht (3) aus einem nicht gewebten Stoff besteht.

5. Verfahren zum Bilden von Mehrschicht-Schallisolationsprodukten nach einem oder mehreren der Ansprüche 1 bis 4, das die folgenden Schritte umfasst:
- Auftragen eines ersten Bindemittels (2) auf eine Oberfläche einer Trägerschicht,
- Verteilen eines Gemisches aus Gummigranulat (1) auf der vorher mit Klebemittel versehenen Oberfläche,
- Einsetzen der Trägerschicht (3) mit dem Gemisch (1) in einen Trocknungsofen (26),
**dadurch gekennzeichnet, dass** vor dem Einsetzen in den Ofen (26) ein zweites Bindemittel auf das Gemisch gesprüht wird, wobei dieses letztere wenigstens teilweise EPDM-Gummi enthält.

6. Verfahren nach Anspruch 5, **gekennzeichnet durch** Rollen des den Ofen (26) verfassenden Mehrschichtprodukts zu einer Rolle, so dass seine Oberfläche, die das Gummigranulat (1) enthält, nach außen weist.

7. Anlage zum Ausführen des Verfahrens nach Anspruch 5, die umfasst: einen Halter für eine Rolle (10) aus einer Bahn aus Trägermaterial (3), eine Station (14) zum Auftragen eines ersten Bindemittel auf die sich vorwärtsbewegende Bahn, eine Station (20) zum Verteilen von Gummigranulat (1) auf der Trägerbahn (3), wobei die Bindeschicht auf ihre obere Oberfläche aufgebracht ist, und einen Ofen (26) zum Trocknen des Bindemittels, **dadurch gekennzeichnet, dass** die Verteilungsstation (20) mit Gummigranulat (1), das wenigstens teilweise aus EPDM besteht, versorgt wird und dieses zwischen dieser Station und dem Ofen (26) verteilt, wobei eine Station (24) zum Sprühen eines zweiten Bindemittels auf das Granulat, das bereits auf der Trägerbahn (3) liegt, vorgesehen ist.

8. Anlage nach Anspruch 7, **dadurch gekennzeichnet, dass** sie stromabseitig des Ofens (26) eine Station zum Rollen des derart gebildeten Mehrschicht-Schallisolationsprodukts zu einer Rolle umfasst, so dass ihre Oberfläche, die das Gummigranulat (1) enthält, nach außen weist.

## Revendications

1. Produit d'isolation sonore multicouche pour l'industrie du bâtiment, comprenant une couche de granules (1) au moins en partie en caoutchouc d'EPDM, une couche de support (3), au moins un premier liant (2) qui colle les granules de caoutchouc ensemble et au support, **caractérisé en ce qu'**il comprend un autre liant pulvérisé sur ladite couche de granulés de caoutchouc (1), sur la face opposée à celle collée à la couche de support (3).

2. Produit d'isolation sonore multicouche selon la revendication 1, **caractérisé en ce que** le premier liant (2) est un latex synthétique.

3. Produit d'isolation sonore multicouche selon la revendication 3, **caractérisé en ce que** ledit autre liant est à base d'acrylique.

4. Produit d'isolation sonore multicouche selon l'une quelconque des revendications 1 à 3, **caractérisé en ce que** la couche de support (3) est constituée d'un tissu non tissé.

5. Procédé de formation de produits d'isolation sonore multicouche selon l'une quelconque des revendications 1 à 4, comprenant les étapes consistant à :
- étaler un premier liant (2) sur une surface d'une couche de support,
- distribuer un mélange de granules de caoutchouc (1) sur ladite surface précédemment collée,
- insérer la couche de support (3) avec le mélange (1) dans un four de séchage 126),
**caractérisé en ce qu'**avant ladite insertion dans ledit four (26), un second liant est pulvérisé sur ledit mélange, ce dernier comprenant au moins en partie du caoutchouc d'EPDM.

6. Procédé selon la revendication 5, **caractérisé en ce que** l'on enroule le produit multicouche sortant du four (26) de sorte que sa surface comprenant les granules de caoutchouc (1) soit tournée vers l'extérieur.

7. Usine pour mettre en oeuvre le procédé selon la revendication 5, comprenant un support pour un rouleau (10) d'une nappe de matériau de support (3), un poste d'étalement (14) d'un premier liant sur ladite nappe en cours d'avancement, une poste de distribution (20) de granules de caoutchouc (1) sur ladite nappe de support (3) avec la couche de liaison appliquée sur sa surface supérieure est un four (26) pour sécher le liant, **caractérisée en ce que** ledit poste de distribution (20) est alimenté en granules de caoutchouc (1) au moins en partie d'EPDM qu'il distribue, tandis qu'il est prévu entre ce poste et ledit four (26) un poste de pulvérisation (24) d'un second liant sur les granules déjà étalés sur la nappe de support (3).

8. Usine selon la revendication 7, **caractérisé en ce qu'**elle comprend, en aval du four (26), un poste pour enrouler le produit d'isolation sonore multicouche ainsi formé en rouleau de sorte que sa surface comprenant les granules de caoutchouc (1) soit tournée vers l'extérieur.
